(19) Europäisches Patentamt / European Patent Office / Office européen des brevets

(11) **EP 2 195 610 B1**

(12) **EUROPÄISCHE PATENTSCHRIFT**

(45) Veröffentlichungstag und Bekanntmachung des Hinweises auf die Patenterteilung:
**01.10.2014 Patentblatt 2014/40**

(21) Anmeldenummer: **07818599.8**

(22) Anmeldetag: **01.10.2007**

(51) Int Cl.:
***G01B 11/25*** *(2006.01)*

(86) Internationale Anmeldenummer:
**PCT/EP2007/008519**

(87) Internationale Veröffentlichungsnummer:
**WO 2009/046730 (16.04.2009 Gazette 2009/16)**

(54) **VEFAHREN UND VORRICHTUNG ZUM ERFASSEN EINER OBERFLÄCHE ODER EINES OBERFLÄCHENABSCHNITTS EINES KÖRPERS**

METHOD AND DEVICE FOR DETECTING A SURFACE OR A SURFACE SECTION OF A BODY

PROCÉDÉ ET DISPOSITIF DE DÉTECTION D'UNE SURFACE OU D'UNE PORTION DE SURFACE D'UN CORPS

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**16.06.2010 Patentblatt 2010/24**

(73) Patentinhaber: **Siemens Aktiengesellschaft**
**80333 München (DE)**

(72) Erfinder:
• **FORSTER, Frank**
**81739 München (DE)**
• **LALONI, Claudio**
**82024 Taufkirchen (DE)**
• **LUCZAK, Andreas**
**90411 Nürnberg (DE)**
• **PFÖRTNER, Andreas**
**90587 Veitsbronn (DE)**
• **WOLFRUM, Klaus**
**90425 Nürnberg (DE)**

(56) Entgegenhaltungen:
**US-B1- 6 438 272    US-B1- 6 503 195**

**Beschreibung**

Die Erfindung betrifft ein Verfahren zum Erfassen einer Oberfläche oder eines Oberflächenabschnitts eines Körpers gemäß dem Oberbegriff des Patentanspruches 1. Ein solches Verfahren ist beispielsweise jeweils aus US 6.438,272 und US 6,503,195 bekannt. Weiterhin betrifft die Erfindung eine Vorrichtung zum Erfassen einer Oberfläche oder eines Oberflächenabschnitts eines Körpers gemäß dem Patentanspruch 11.

Derartige optische Verfahren zur Messung der Oberfläche des Körpers erfolgen auf der Grundlage von kodiertem Licht, dessen farbiges Lichtmuster auf die Oberfläche projiziert wird. Die Verformung des Lichtmusters wird mit der Bilderfassungseinrichtung aufgenommen und von der Datenverarbeitungseinrichtung ausgewertet. Die Verformung des Lichtmusters ermöglicht Rückschlüsse auf die Struktur der Oberfläche des Körpers.

Aus der EP 1 523 654 B1 ist ein Verfahren zur dreidimensionalen Erfassung von Objekten bekannt. Dabei wird ein Farbmuster mit bekannten Projektionsdaten auf das zu erfassende Objekt projiziert. Das projizierte Muster wird mit Hilfe einer Kamera erfasst. In einer Auswerteeinheit wird das von der Kamera erzeugte Abbild zu dreidimensionalen Objektkoordinaten verarbeitet.

Bei diesem Verfahren wird eine handelsübliche Messvorrichtung verwendet. Das projizierte Muster besteht aus Farbstreifen, die aus Kombinationen der drei Grundfarben Rot, Grün und Blau bestehen. Dabei wird ein Farbrad verwendet, das aus drei Filtern für diese drei Grundfarben besteht. Durch die Rotation des Farbrades werden abwechselnd die drei Grundfarben durchgelassen. Anschließend trifft der Lichtstrahl auf einen DMD-Chip (DMD = digital micromirror device), der eine Vielzahl kleiner Spiegel umfasst. Die Spiegel können sich innerhalb von 20 Mikrosekunden in ihrem Winkel einzeln verstellen. Durch die Stellung der Spiegel wird das projizierte Muster festgelegt.

Die Zuverlässigkeit von Verfahren, die kodiertes Licht nutzen, hängt insbesondere von dem Verhältnis zwischen den Intensitäten des Lichtmusters und des Umgebungslichts ab. Da bei dem vorgenannten Verfahren drei Grundfarben verwendet werden, steht für jede Farbe im Durchschnitt höchstens ein Drittel der gesamten Lichtleistung zur Verfügung. Außerdem geht weitere Lichtleistung während der Übergangsphasen zwischen zwei aufeinander folgenden Grundfarben verloren.

Bei bekannten Verfahren und Vorrichtungen wurde das Fremdlicht mit mechanischen Sichtblenden abgeschirmt. Die Messung findet innerhalb eines Gehäuses statt, in das nur wenig oder kein Tageslicht eindringt.

Bei einem weiteren bekannten Verfahren und der entsprechenden Vorrichtung werden die beiden Farben Magenta und Gelb mit dem Farbrad erzeugt. Anschließend trifft der Lichtstrahl auf ein Farbteilprisma und zwei DMD-Chips, die nebeneinander angeordnet sind. Dieses Verfahren ermöglicht zwar ein intensiveres Nutzlicht, ist aber sehr aufwändig und kostenintensiv.

Es ist Aufgabe der Erfindung, ein verbessertes Verfahren und eine entsprechende Vorrichtung zum Erfassen einer Oberfläche oder eines Oberflächenabschnitts eines Körpers bereit zu stellen, das auch bei einem relativ geringen konstruktiven Aufwand ein hinreichendes Signal-Rausch-Verhältnis ermöglicht.

Diese Aufgabe wird hinsichtlich des Verfahrens durch den Gegenstand gemäß Patentanspruch 1 gelöst.

Gemäß der Erfindung ist vorgesehen, dass das vorbestimmte Lichtmuster zwei definierte Farben umfasst, die wechselweise und periodisch von der Beleuchtungseinrichtung projiziert werden.

Somit steht für jede der beiden Farben im Durchschnitt die Hälfte der gesamten Lichtleistung zur Verfügung. Außerdem gibt es in einem Zyklus nur zwei Farbübergänge, so dass die Verluste an Lichtleistung während der Farbübergänge gering sind. Das Lichtmuster mit den beiden Farben kann mit einer einzigen Farbkamera erfasst werden, so dass der konstruktive Aufwand gering ist.

Die zwei definierten Farben sind zwei verschiedene Grundfarben, deren Spektralverteilungen vorzugsweise jeweils einen Peak aufweisen.

Beispielsweise sind die zwei definierten Farben zumindest annähernd monochromatisch. Dies lässt sich mit einem Laser oder Leuchtdioden ohne großen Aufwand realisieren.

Bei der bevorzugten Ausführungsform ist vorgesehen, dass die Intensitätsverteilung $I_{OK}$ auf dem Oberflächenabschnitt des Körpers gefiltert wird, so dass das Licht der zwei definierten Farben zu wenigstens einem Bildsensor durchgelassen wird. Auf diese Weise wird das Fremdlicht, das meist über den gesamten Spektralbereich verteilt ist, zu einem großen Teil gefiltert. Dies trägt zu einer Erhöhung des Signal-Rausch-Verhältnisses bei.

Weiterhin besteht die Möglichkeit, dass Licht von externen Lichtquellen wie z.B. Fenstern gefiltert wird, so dass das Licht der zwei definierten Farben zurückgehalten wird. Dieser Filter ist invers zu dem vorgenannten Filter vor dem Bildsensor.

Bei der bevorzugten Ausführungsform wird die Intensitätsverteilung $I_{OK}$ auf dem Oberflächenabschnitt des Körpers mit wenigstens einer Farbkamera erfasst. Bei dieser Konstellation reicht ein einziger Bildsensor aus, was zu einem geringen konstruktiven Aufwand beiträgt.

Darüber hinaus ist erfindungsgemäß vorgesehen, dass das Licht von den externen Lichtquellen mit Verwendung einer dritten Grundfarbe erfasst wird. Auf diese Weise werden alle drei Grundfarben der Farbkamera genutzt. Dabei sind zwei Grundfarben der Farbkamera auf die beiden definierten Farben des Lichtmusters abgestimmt und die dritte Grundfarbe der Farbkamera wird zur Erfassung des Fremdlichts benötigt. Da das Fremdlicht meist eine Gleichverteilung aufweist, lassen sich Rückschlüsse auf die Intensität der anderen Farben des Fremdlichts ziehen.

Bei einem alternativen Verfahren kann vorgesehen sein, dass der Lichtstrahl wenigstens einmal geteilt und wenigstens zwei Bildsensoren zugeführt wird. Dies ermöglicht eine höhere Bildauflösung.

Dabei können die wenigstens zwei Bildsensoren jeweils auf eine der zwei definierten Farben ansprechen. Dies lässt sich mit zwei Schwarz-Weiß-Kameras realisieren, denen ein entsprechender Filter vorgeschaltet ist.

Weiterhin kann der Lichtstrahl von wenigstens einem dichroitischen Spiegel geteilt und anschließend den beiden Bildsensoren zugeführt werden.

Die der Erfindung zugrunde liegende Aufgabe wird hinsichtlich der Vorrichtung durch den Gegenstand gemäß Patentanspruch 11 gelöst.

Erfindungsgemäß ist vorgesehen, dass die Beleuchtungseinrichtung zwei definierte Farben wechselweise und periodisch für das vorbestimmte Muster erzeugt.

Auf diese Weise steht für jede der beiden Farben im Durchschnitt die Hälfte der gesamten Lichtleistung zur Verfügung.

Darüber hinaus gibt es in einem Zyklus nur zwei Farbübergänge, so dass auch die Verluste an Lichtleistung während der Farbübergänge gering sind. Das Lichtmuster mit den beiden Farben kann mit einer einzigen Farbkamera erfasst werden, so dass der konstruktive Aufwand gering ist.

Beispielsweise ist vorgesehen, dass die Beleuchtungseinrichtung zwei verschiedene Grundfarben erzeugt, deren Spektralverteilungen jeweils einen Peak aufweisen.

Bei der bevorzugten Ausführungsform weist die Beleuchtungseinrichtung ein Farbrad auf, das einer Lichtquelle nachgeschaltet ist und wenigstens zwei Farbfilter umfasst. Beispielsweise bilden die Farbfilter jeweils einen Sektor des Farbrades.

Weiterhin ist vorgesehen, dass die Beleuchtungseinrichtung wenigstens einen DMD-Chip zum Festlegen der geometrischen Eigenschaften des Lichtmusters aufweist. Dabei ist der DMD-Chip dem Farbrad nachgeschaltet.

Bei der bevorzugten Ausführungsform weist die Bilderfassungseinrichtung wenigstens eine Farbkamera auf.

Bei einer alternativen Ausführungsform ist vorgesehen, dass die Bilderfassungseinrichtung wenigstens zwei Schwarz-Weiß-Kameras aufweist, wobei für jede der zwei definierten Farben jeweils eine Schwarz-Weiß-Kamera vorgesehen ist.

Dabei ist beiden Schwarz-Weiß-Kameras beispielsweise jeweils ein Farbfilter vorgeschaltet, wobei die Farbfilter für jeweils eine der zwei definierten Farben durchlässig sind.

Weiterhin ist vorgesehen, dass den Schwarz-Weiß-Kameras ein dichroitischer Spiegel vorgeschaltet ist, wobei die Farbfilter für jeweils eine der zwei definierten Farben durchlässig sind.

Außerdem sind die Farbkamera und/oder die Schwarz-Weiß-Kameras vorzugsweise als CCD-Chips ausgebildet. Auch dies ermöglicht einen geringen konstruktiven Aufwand.

Schließlich kann der Vorrichtung zusätzlich wenigstens eine Filtereineinrichtung zugeordnet sein, die zwischen der Vorrichtung und Fremdlichtquellen angeordnet ist. Auch dies trägt zu einer Verbesserung des Signal-Rausch-Verhältnisses bei.

Weitere Merkmale, Vorteile und besondere Ausführungsformen der Erfindung sind Gegenstand der abhängigen Ansprüche.

Nachstehend wird das Verfahren gemäß der Erfindung in der Figurenbeschreibung anhand bevorzugter Ausführungsformen und unter Bezugnahme auf die beigefügten Zeichnungen näher erläutert. Es zeigen:

FIG. 1    eine schematische Darstellung einer Vorrichtung gemäß einer bevorzugten Ausführungsform der Erfindung,

FIG. 2    eine schematische Darstellung einer Beleuchtungseinrichtung gemäß einer bevorzugten Ausführungsform der Erfindung,

FIG. 3    eine schematische beispielhafte Intensitätsverteilung des projizierten Lichts gemäß der bevorzugten Ausführungsform der Erfindung,

FIG. 4    eine schematische beispielhafte Transmissionsverteilung eines Multi-Bandpassfilters gemäß der bevorzugten Ausführungsform der Erfindung, und

FIG. 5    eine schematische Ansicht des Aufbaus einer Bilderfassungseinrichtung gemäß einer speziellen Ausführungsform der Erfindung.

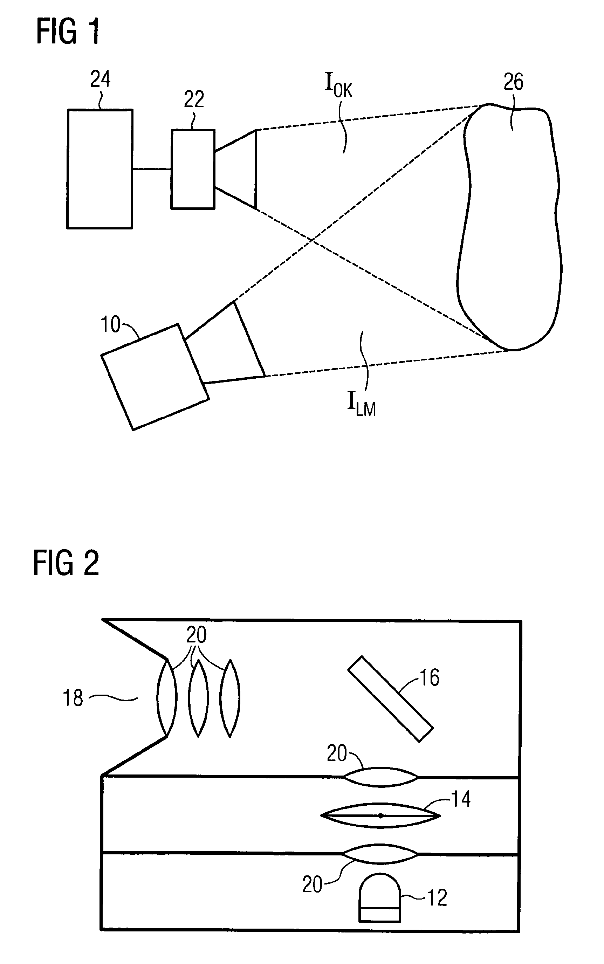

FIG. 1 zeigt eine schematische Darstellung einer Vorrichtung gemäß einer bevorzugten Ausführungsform der Erfindung. Die Vorrichtung weist eine Beleuchtungseinrichtung 10, eine Bilderfassungseinrichtung 22 und eine Datenverarbeitungseinrichtung 24 auf.

Die Beleuchtungseinrichtung 10 erzeugt ein vorbestimmtes Lichtmuster, das auf einen Körper 26 projiziert wird. Das Lichtmuster ist durch eine räumliche Intensitätsverteilung $I_{LM}$ charakterisiert. Alternativ oder zusätzlich kann das Lichtmuster auch durch die zeitliche Intensitätsverteilung charakterisiert sein. Das Lichtmuster wird wechselweise und periodisch in zwei verschiedenen Grundfarben auf einen Oberflächenflächenabschnitt des Körpers 26 projiziert. Die Intensitätsverteilung $I_{OK}$ des Lichts auf dem Oberflächenflächenabschnitt wird von der Bilderfassungseinrichtung 22 gemessen.

Die Intensitätsverteilung $I_{OK}$ des erfassten Lichts auf dem Oberflächenflächenabschnitt hängt einerseits von dem projizierten Licht der Beleuchtungseinrichtung 10 und andererseits von der geometrischen Form des Oberflächenflächenabschnitts ab. Die von der Bilderfassungseinrichtung 22 gemessene Intensitätsverteilung $I_{OK}$ wird von der Datenverarbeitungseinrichtung 24 ausgewertet. Auf diese Weise lassen sich Rückschlüsse auf die Struktur des Oberflächenflächenabschnitts ziehen.

Die Bilderfassungseinrichtung 22 weist vorzugsweise wenigstens eine elektronische Kamera auf. Die elektronische Kamera ist beispielsweise als CCD-Chip ausgebildet.

In FIG. 2 ist eine schematische Darstellung einer Beleuchtungseinrichtung 10 gemäß einer bevorzugten Ausführungsform der Erfindung dargestellt.

Die Beleuchtungseinrichtung 10 umfasst eine Lichtquelle 12, ein Farbrad 14, einen DMD-Chip 16 (DMD = digital micromirror device) und eine Lichtaustrittsöffnung 18. Zwischen der Lichtquelle 12, dem Farbrad 14, dem DMD-Chip 16 und der Lichtaustrittsöffnung 18 sind geeignete optische Elemente, beispielsweise Linsen 20, ein oder mehrere Lichtstäbe, Spiegel und/oder IR-Filter angeordnet. Weiterhin umfasst die Beleuchtungseinrichtung 10 eine nicht dargestellte Steuereinrichtung und elektrische Anschlüsse. Bei der Steuereinrichtung handelt es sich vorzugsweise um eine elektrische oder elektronische Schaltung. Die Anschlüsse sind insbesondere für die Stromversorgung und die Kommunikation mit weiteren Einrichtungen vorgesehen. Die Kommunikation kann beispielsweise mit der Auswerteeinheit der Bilderfassungseinrichtung 22 erfolgen.

Als Lichtquelle 12 kann beispielsweise mindestens ein Laser oder eine Leuchtdiode verwendet werden. Ebenso kann eine Lichtquelle mit weißem Licht, beispielsweise eine Glühbirne verwendet werden. Das Farbrad 14 ist drehbar in der Beleuchtungseinrichtung 10 angeordnet. Die Drehachse des Farbrades 14 erstreckt sich parallel zum Lichtstrahl. Das Farbrad 14 ist als Scheibe ausgebildet. Ein Filter für eine erste Grundfarbe bildet den ersten Sektor der Scheibe. Der zweite Sektor der Scheibe wird von einem Filter für eine zweite Grundfarbe gebildet. Als Grundfarben können beispielsweise Grün und Blau verwendet werden. Das Farbrad 14 führt beispielsweise 3600 Umdrehungen pro Minute aus. Der von der Lichtquelle 12 ausgehende Lichtstrahl wird von dem Farbrad 14 gefiltert, so dass abwechselnd die beiden Grundfarben durchgelassen werden.

Anschließend erreicht der Lichtstrahl den DMD-Chip 16. Der DMD-Chip 16 umfasst eine Vielzahl kleiner Spiegel, die individuell bewegbar angeordnet sind. Durch die Ausrichtung der Spiegel wird die räumliche Intensitätsverteilung des von der Beleuchtungseinrichtung 10 projizierten Lichts festgelegt. Der DMD-Chip 16 ist von der Steuereinrichtung ansteuerbar. Durch die Lichtaustrittsöffnung 18 tritt der Lichtstrahl aus der Beleuchtungseinrichtung 10 aus. Die Linsen 20 sind zur Ausrichtung des Strahlengangs innerhalb und außerhalb der Beleuchtungseinrichtung 10 vorgesehen.

Durch die Verwendung des Farbrades 14 mit zwei Filtern steht für jede der beiden Grundfarben jeweils die Hälfte der Lichtleistung zur Verfügung, die dem Farbrad 14 zugeführt wird. Da das Farbrad 14 nur zwei Farbübergänge aufweist, sind darüber hinaus die Verluste während der Übergangsphasen gering. Die möglichen Kombinationen der beiden Grundfarben ermöglichen vier Zustände.

Durch die reduzierte Anzahl von Farbkombinationen verringert sich zwar der Bereich, in dem die Abstandsinformation eindeutig ist. Dies kann beispielsweise dadurch kompensiert werden, dass das farbkodierte Verfahren mit einem zeitkodierten Verfahren kombiniert wird. Das zeitkodierte Verfahren hat einen sehr großen Bereich, in dem die Abstandsinformation eindeutig ist, aber den Nachteil einer wesentlich geringeren Messfrequenz. Der Körper 26 wird zunächst nach dem zeitkodierten Verfahren gemessen und darf dabei nicht bewegt werden. Danach wird auf das farbkodierte Verfahren umgeschaltet. Tiefendaten, die dabei nicht eindeutig sind, können durch Vergleich mit der zeitkodierten Eingangsmessung abgeglichen werden. Eine weitere Möglichkeit besteht darin, das farbkodierte Verfahren mit reduzierter Tiefeneindeutigkeit zu nutzen, jedoch zusätzlich bereits vorliegende Informationen zum Objekt ebenfalls in die Ermittlung der Eindeutigkeit einfließen zu lassen. Tiefendaten die nicht eindeutig sind können so z.B. mit einem mathematischen Modell des Objekts abgeglichen werden.

Dadurch kann die eigentlich Messung mit der bei der Farbkodierung möglichen hohen Messfrequenz durchgeführt werden, ohne den Nachteil der fehlenden Tiefeneindeutigkeit zu haben.

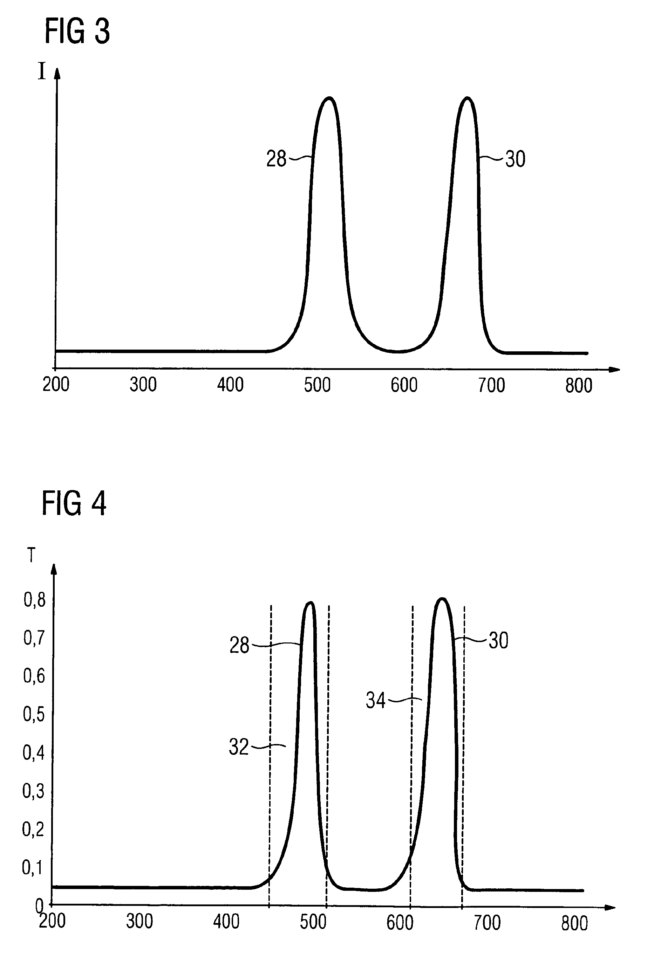

FIG. 3 zeigt eine schematische beispielhafte Intensitätsverteilung $I_{LM}$ des Lichtmusters für das projizierte Licht gemäß der bevorzugten Ausführungsform der Erfindung. Die Intensitätsverteilung $I_{LM}$ des Lichtmusters für das projizierte Licht ist als Funktion der Wellenlänge dargestellt. In diesem Beispiel werden die Grundfarben Rot und Blau verwendet. Das Spektrum setzt sich aus einem blauen Anteil 28, einem roten Anteil 30 und einem Fremdlichtanteil zusammen. Der Fremdlichtanteil ist gleichmäßig über das gesamte sichtbare Spektrum verteilt. Der Fremdlichtanteil ist beispielsweise auf Sonnenlicht oder diffuses Tageslicht zurückzuführen.

In FIG. 4 ist eine schematische beispielhafte Transmissionsverteilung eines Multi-Bandpassfilters gemäß der bevorzugten Ausführungsform der Erfindung dargestellt. Die Transmissionsverteilung ist als Funktion der Wellenlänge dargestellt. In diesem Beispiel ist der Multi-Bandpassfilter für einen blauen Filterbereich 32 und für einen roten Filterbereich 34 vorgesehen.

Der Multi-Bandpassfilter ist ein Teil der Bilderfassungseinrichtung 22 und dem CCD-Chip vorgeschaltet. Durch den Multi-Bandpassfilter wird das Licht der beiden Grundfarben durchgelassen und der übrige Spektralbereich absorbiert. Auf diese Weise wird der größte Teil der Fremdlichts, das sich gleichmäßig über den gesamten Spektralbereich verteilt, gefiltert. Das Nutzlicht in den beiden Grundfarben wird dagegen durchgelassen. Dies trägt zu einer Fremdlichtkompensation und einer Erhöhung des Signal-Rausch-Verhältnisses bei.

Darüber hinaus besteht die Möglichkeit, potenzielle Fremdlichtquellen mit einem Filter zu versehen, dessen Transmissionsverhalten invers zu dem vorgenannten Multi-Bandpassfilter ist.

Da einerseits die Beleuchtungseinrichtung 10 nur zwei Grundfarben bereitstellt, aber andererseits die Bilderfassungseinrichtung 22 einen CCD-Chip mit Filter für drei Grundfarben aufweist, werden die für die dritte Grundfarbe empfindlichen Zellen erfindungsgemäß zur Bestimmung des Fremdlichtes verwendet. Der CCD-Chip umfasst eine Vielzahl lichtempfindlicher Zellen, denen abwechselnd Farbfilter für die drei Grundfarben zugeordnet sind. Da das projizierte Farbmuster nur zwei Grundfarben enthält, werden die Zellen für die dritte Grundfarbe nicht zur Erfassung der Intensitätsverteilung benötigt. Die Zellen für die dritte Grundfarbe erfassen somit einen Teil des Fremdlichtes. Da das Fremdlicht im sichtbaren Bereich eine Gleichverteilung aufweist, entspricht die Intensität der dritten Grundfarbe auch denen der beiden anderen Grundfarben. Somit kann der Fremdlichtanteil bei den beiden anderen Grundfarben ermittelt und subtrahiert werden. Dies trägt zu einer Verbesserung des Signal-Rausch-Verhältnisses bei. Bei einem Eichverfahren kann das Verhältnis zwischen den Intensitäten der drei Grundfarben bestimmt und als Korrekturfaktor für die Auswertung verwendet werden.

Diese Fremdlichtkompensation wird anhand der nachstehenden Beispielrechnung näher erläutert. Es seien F(rot), F(blau) und F(grün) die Fremdlichtintensitäten der drei Grundfarben. Weiterhin seinen S(blau) und S(grün) die Signalintensitäten im blauen bzw. grünen Spektrum. In diesem Fall ergibt sich für das Signal-Rausch-Verhältnis für die grünen Bildpunkte:

$$\mathrm{SR(grün)ohne} = [\mathrm{S(grün)} + \mathrm{F(grün)}] \ / \ \mathrm{F(grün)}$$

Die Fremdlichtkompensation ermöglicht, dass aus dem Messwert F(rot) auf die anderen beiden Werte F(blau) und F(grün) geschlossen werden kann. Bei einer Bilderfassung ohne Projektion des Lichtmusters kann ein Korrekturfaktor x bestimmt werden:

$$\mathrm{x} = \mathrm{F(rot)} \ / \ \mathrm{F(grün)}$$

Der Korrekturfaktor x kann als konstant angenommen werden. Bei den nachfolgenden Messungen kann jederzeit der Wert mit Hilfe der roten Bildpunkte bestimmt werden.

$$\mathrm{F(grün)} = \mathrm{F(rot)} \ / \ \mathrm{x}$$

Anschließend wird vom Gesamtsignal bei den grünen Bildpunkten der Fremdlichtanteil F(grün) subtrahiert. Für das Signal-Rausch-Verhältnis mit Fremdlichtkompensation ergibt sich daraus:

$$\mathrm{SR(grün)mit} = [\mathrm{S(grün)}+\mathrm{F(grün)}-\mathrm{F(rot)/x}] \ / \ [\mathrm{F(grün)}-\mathrm{F(rot)/x}]$$

Wenn der Korrekturfaktor x tatsächlich konstant wäre, dann würde dieses Signal-Rausch-Verhältnis gegen unendlich gehen. Da der Korrekturfaktor x in der Praxis jedoch nur näherungsweise konstant ist, erreicht das Signal-Rausch-Verhältnis einen sehr hohen Wert, der höher ist als SR(grün)ohne.

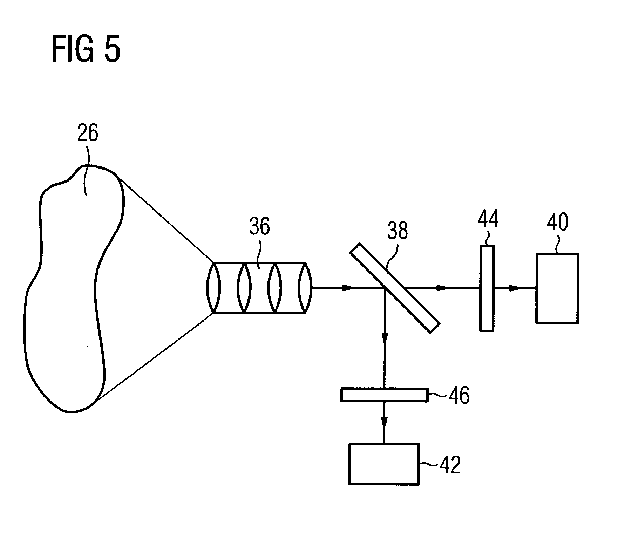

FIG. 5 zeigt eine schematische Ansicht des Aufbaus einer Bilderfassungseinrichtung gemäß einer speziellen Ausführungsform der Erfindung. Die dargestellte Bilderfassungseinrichtung ist eine spezielle Ausführungsform, die neben weiteren Alternativen im Rahmen der Erfindung verwendet werden kann. Die Bilderfassungseinrichtung umfasst ein Objektiv 36, einen dichroitischen Spiegel 38, einen ersten CCD-Chip 40 und eine zweiten CCD-Chip 42. Die beiden CCD-Chips 40 und 42 sind als Schwarz-Weiß-Kameras ausgebildet. Dem ersten CCD-Chip 40 ist ein erster Farbfilter 44 vorgeschaltet. Dem zweiten CCD-Chip 42 ist ein zweiter Farbfilter 46 vorgeschaltet. Die Farbfilter 44 und 46 sind auf die zwei Grundfarben abgestimmt, die von der Beleuchtungseinrichtung 10 mit Hilfe des Farbrades 14 bereitgestellt werden.

Bei dieser Methode kann die volle Auflösung der CCD-Chips 40 und 42 genutzt werden. Die Verwendung von Interpolationsalgorithmen ist nicht unbedingt erforderlich.

Dieses Prinzip ist auch bei einem Messverfahren mit drei Grundfarben verwendbar, wobei drei Schwarz-Weiß-Kameras mit entsprechenden Filtern vorgesehen sind.

Bei einer weiteren Ausführungsform weist die Bilderfassungseinrichtung eine Schwarz-Weiß-Kamera auf. Dabei werden zwei Einzelbilder in Synchronisation mit dem Farbrad aufgenommen. Damit lässt sich mit einer einzigen Schwarz-Weiß-Kamera ein Farbbild erzeugen, indem zwei Einzelbilder in Synchronisation mit.dem Farbrad aufgenommen werden. Bei einer Kamera, die 30 Einzelbilder pro Sekunde erfasst, und einem Farbrad 14 mit einer Rotationsfrequenz von 15 Hz wird während der ersten 20 ms die erste Grundfarbe projiziert und das erste Bild mit einer Belichtungszeit von 20 ms aufgenommen. Anschließend werden etwa 10 ms zum Auslesen des ersten Bildes benötigt. Während der nächsten 20 ms wird die zweite Grundfarbe projiziert und das zweite Bild mit einer Belichtungszeit von 20 ms aufgenommen. Zum Auslesen des zweiten Bildes werden danach etwa 10 ms benötigt. Bei dieser Ausführungsform lässt sich eine besonders hohe Ortsauflösung erreichen.

Das erfindungsgemäße Verfahren und die entsprechende Vorrichtung ermöglichen eine Verbesserung des Signal-Rausch-Verhältnisses.

**Patentansprüche**

1. Verfahren zum Erfassen einer Oberfläche oder eines Oberflächenabschnitts eines Körpers (26), das folgende Schritte aufweist:

   - Projizieren eines vorbestimmten Lichtmusters auf den Oberflächenabschnitt des Körpers (26) mit einer Beleuchtungseinrichtung (10), wobei das Lichtmuster durch dessen räumliche und/oder zeitliche Intensitätsverteilung ($I_{LM}$) definiert ist,
   - Erfassen einer Intensitätsverteilung ($Z_{OK}$) auf dem Oberflächenabschnitt des Körpers (26) mit einer Bilderfassungseinrichtung (22), und
   - Berechnen einer Oberflächenstruktur des Oberflächenabschnitts des Körpers (26) mit einer Datenverarbeitungseinrichtung (24) auf der Grundlage der Intensitätsverteilung ($I_{OK}$) auf dem Oberflächenabschnitt des Körpers (26) und der Intensitätsverteilung ($I_{LM}$) der Lichtmusters,

   **dadurch gekennzeichnet, dass** das vorbestimmte Lichtmuster zwei verschiedene Grundfarben umfasst, die wechselweise und periodisch von der Beleuchtungseinriohtung (10) projiziert werden, dass mit der Bilderfassungseinrichtung für eine dritte Grundfarbe ein Teil von Fremdlicht erfasst wird, das im sichtbaren Bereich eine Gleichverteilung aufweist, dass zur Fremdlichtkompensation ein Fremdlichtanteil der beiden anderen Grundfarben ermittelt und subtrahiert wird.

2. Verfahren nach Anspruch 1,
   **dadurch gekennzeichnet, dass** Spektralverteilungen der zwei verschiedenen Grundfarben des vorbestimmten Lichtmusters jeweils einen Peak aufweisen.

3. Verfahren nach Anspruch 1 oder 2,
   **dadurch gekennzeichnet, dass** die zwei definierten Farben zumindest annähernd monochromatisch sind.

4. Verfahren nach einem der vorhergehenden Ansprüche,
   **dadurch gekennzeichnet, dass** die Internsitätsverteilung ($I_{OK}$) auf dem Oberflächenabschnitt des Körpers (26) gefiltert (44, 46) wird, so dass das Licht der zwei definierten Farben zu wenigstens einem Bildsensor (40, 42) durchgelassen wird.

5. Verfahren nach einem der vorhergehenden Ansprüche,

**dadurch gekennzeichnet, dass** das Licht von externen Lichtquellen gefiltert wird, so dass das Licht der zwei definierten Farben zurückgehalten wird.

6. Verfahren nach einem der vorhergehenden Ansprüche,
**dadurch gekennzeichnet, dass** die Intensitätsverteilung ($I_{OK}$) auf dem Oberflächenabschnitt des Körpers (26) mit wenigstens einer Farbkamera erfasst wird.

7. Verfahren nach einem der Ansprüche 2 bis 6,
**dadurch gekennzeichnet, dass** bei einem Eichverfahren ein Verhältnis zwischen Intensitäten der drei Grundfarben des Fremdlichts bestimmt und als Korrekturfaktor für eine Auswertung verwendet wird.

8. Verfahren nach einem der vorhergehenden Ansprüche,
**dadurch gekennzeichnet, dass** der Lichtstrahl wenigstens einmal geteilt und wenigstens zwei Bildsensoren (40, 42) zugeführt wird.

9. Verfahren nach Anspruch 8,
**dadurch gekennzeichnet, dass** die wenigstens zwei Bildsensoren (40, 42) jeweils auf eine der zwei definierten Farben ansprechen.

10. Verfahren nach Anspruch 8 oder 9,
**dadurch gekennzeichnet, dass** der Lichtstrahl von wenigstens einem dichroitischen Spiegel (38) geteilt wird.

11. Vorrichtung zum Erfassen einer Oberfläche oder eines Oberflächenabschnitts eines Körpers (26), wobei die Vorrichtung Folgendes aufweist:

- eine Beleuchtungseinrichtung (11) zum Projizieren eines vorbestimmten Lichtmusters auf den Oberflächenabschnitt des Körpers (26), wobei das Lichtmuster durch dessen räumliche und/oder zeitliche Intensitätsverteilung ($I_{LM}$) definiert ist,
- eine Bilderfassungseinrichtung (22) zum Erfassen einer Intensitätsverteilung ($I_{OK}$) auf dem Oberflächenabschnitt des Körpers (26), und
- eine Datenverarbeitungseinrichtung (24) zum Berechnen der Oberflächenstruktur des Oberflächenabschnitts (11) aus der Intensitätsverteilung ($I_{OK}$) auf dem Oberflächenabschnitt des Körpers (26),

**dadurch gekennzeichnet, dass** die Beleuchtungseinrichtung (10) zwei verschiedene Grundfarben wechselweise und periodisch für das vorbestimmte Lichtmuster erzeugt, dass die Bilderfassungseinrichtung für eine dritte Grundfarbe zur Erfassung eines Teils von Fremdlicht ausgestaltet ist, das im sichtbaren Bereich eine Gleichverteilung aufweist, wobei die Vorrichtung zur Fremdlichtkompensation derart ausgestaltet ist, dass ein Fremdlichtanteil der beiden anderen Grundfarben ermittelt und subtrahiert wird.

12. Vorrichtung nach Anspruch 11,
**dadurch gekennzeichnet, dass** Spektralverteilungen der durch die Beleuchtungseinrichtung (10) erzeugten zwei verschiedenen Grundfarben jeweils einen Peak aufweisen.

13. Vorrichtung nach Anspruch 11 oder 12,
**dadurch gekennzeichnet, dass** die Beleuchtungseinrichtung (10) ein Farbrad (14) aufweist, das einer Lichtquelle (12) nachgeschaltet ist und wenigstens zwei Farbfilter umfasst.

14. Vorrichtung nach Anspruch 13,
**dadurch gekennzeichnet, dass** die Farbfilter jeweils einen Sektor des Farbrades (14) bilden.

15. Vorrichtung nach einem der Ansprüche 11 bis 14,
**dadurch gekennzeichnet, dass** die Beleuchtungseinrichtung (10) wenigstens einen DMD-Chip (16) zum Festlegen der geometrischen Eigenschaften des Lichtmusters aufweist.

16. Vorrichtung nach einem der Ansprüche 13 bis 15,
**dadurch gekennzeichnet, dass** der DMD-Chip (16) dem Farbrad (14) nachgeschaltet ist.

17. Vorrichtung nach einem der Ansprüche 11 bis 16,

**dadurch gekennzeichnet, dass** die Bilderfassungseinrichtung (22) wenigstens eine Farbkamera aufweist.

18. Vorrichtung nach einem der Ansprüche 11 bis 16,
   **dadurch gekennzeichnet, dass** die Bilderfassungseinrichtung (22) wenigstens zwei Schwarz-Weiß-Kameras (40, 42) aufweist, wobei für jede der zwei definierten Farben jeweils eine Schwarz-Weiß-Kamera (40, 42) vorgesehen ist.

19. Vorrichtung nach Anspruch 18,
   **dadurch gekennzeichnet, dass** wenigstens zwei Schwarz-Weiß-Kameras (40, 42) jeweils ein Farbfilter (44, 46) vorgeschaltet ist, wobei die Farbfilter (44, 46) für jeweils eine der zwei definierten Farben durchlässig sind.

20. Vorrichtung nach Anspruch 18 oder 19,
   **dadurch gekennzeichnet, dass** den Schwarz-Weiß-Kameras (40, 42) ein dichroitischer Spiegel (38) vorgeschaltet ist, wobei die Farbfilter (44, 46) für jeweils eine der zwei definierten Farben durchlässig sind.

21. Vorrichtung nach einem der Ansprüche 17 bis 20,
   **dadurch gekennzeichnet, dass** die Farbkamera und/oder die Schwarz-Weiß-Kameras (40, 42) als CCD-Chips ausgebildet sind.

22. Vorrichtung nach einem der Ansprüche 11 bis 21,
   **dadurch gekennzeichnet, dass** der Vorrichtung wenigstens eine Filtereineinrichtung zugeordnet ist, die zwischen der Vorrichtung und Fremdlichtquellen angeordnet ist.


**Claims**

1. Method for detecting a surface or a surface section of a body (26), comprising the following steps:

   - projecting a predetermined light pattern onto the surface section of the body (26) by means of an illumination device (10), wherein the light pattern is defined by its spatial and/or temporal intensity distribution ($I_{LM}$),
   - detecting an intensity distribution ($I_{OK}$) on the surface section of the body (26) by means of an image acquisition device (22), and
   - calculating a surface structure of the surface section of the body (26) by means of a data processing device (24) on the basis of the intensity distribution ($I_{OK}$) on the surface section of the body (26) and the intensity distribution ($I_{LM}$) of the light pattern,

   **characterized in that** the predetermined light pattern comprises two different primary colours which are projected alternately and periodically by the illumination device (10), **in that** a portion of extraneous light which has a uniform distribution in the visual range is detected for a third primary colour by means of the image acquisition device, and **in that** an extraneous light proportion of the other two primary colours is determined and subtracted for the purpose of extraneous light compensation.

2. Method according to Claim 1,
   **characterized in that** spectral distributions of the two different primary colours of the predefined light pattern in each case have a peak.

3. Method according to Claim 1 or 2,
   **characterized in that** the two defined colours are at least approximately monochromatic.

4. Method according to any of the preceding claims,
   **characterized in that** the intensity distribution ($I_{OK}$) on the surface section of the body (26) is filtered (44, 46), such that the light of the two defined colours is transmitted to at least one image sensor (40, 42).

5. Method according to any of the preceding claims,
   **characterized in that** the light from external light sources is filtered, such that the light of the two defined colours is kept back.

6. Method according to any of the preceding claims,
   **characterized in that** the intensity distribution ($I_{OK}$) on the surface section of the body (26) is detected by means of at least one colour camera.

7. Method according to any of Claims 2 to 6,
   **characterized in that** in a calibration method a ratio between intensities of the three primary colours of the extraneous light is determined and is used as a correction factor for an evaluation.

8. Method according to any of the preceding claims,
   **characterized in that** the light beam is split at least once and fed to at least two image sensors (40, 42).

9. Method according to Claim 8,
   **characterized in that** the at least two image sensors (40, 42) in each case respond to one of the two defined colours.

10. Method according to Claim 8 or 9,
    **characterized in that** the light beam is split by at least one dichroic mirror (38).

11. Apparatus for detecting a surface or a surface section of a body (26), wherein the apparatus comprises the following:

    - an illumination device (11) for projecting a predetermined light pattern onto the surface section of the body (26), wherein the light pattern is defined by its spatial and/or temporal intensity distribution ($I_{LM}$),
    - an image acquisition device (22) for detecting an intensity distribution ($I_{OK}$) on the surface section of the body (26), and
    - a data processing device (24) for calculating the surface structure of the surface section (11) from the intensity distribution ($I_{Ok}$) on the surface section of the body (26),

    **characterized in that** the illumination device (10) generates two different primary colours alternately and periodically for the predetermined light pattern, **in that** the image acquisition device is configured for a third primary colour for detecting a portion of extraneous light which has a uniform distribution in the visible range, wherein the apparatus is configured for extraneous compensation in such a way that an extraneous light proportion of the other two primary colours is determined and subtracted.

12. Apparatus according to Claim 11,
    **characterized in that** spectral distributions of the two different primary colours generated by the illumination device (10) in each case have a peak.

13. Apparatus according to Claim 11 or 12,
    **characterized in that** the illumination device (10) has a colour wheel (14), which is displaced downstream of a light source (12) and comprises at least two colour filters.

14. Apparatus according to Claim 13,
    **characterized in that** the colour filters in each case form a sector of the colour wheel (14).

15. Apparatus according to any of Claims 11 to 14,
    **characterized in that** the illumination device (10) has at least one DMD chip (16) for defining the geometrical properties of the light pattern.

16. Apparatus according to any of Claims 13 to 15,
    **characterized in that** the DMD chip (16) is disposed downstream of the colour wheel (14).

17. Apparatus according to any of Claims 11 to 16,
    **characterized in that** the image acquisition device (22) has at least one colour camera.

18. Apparatus according to any of Claims 11 to 16,
    **characterized in that** the image acquisition device (22) has at least two black-and-white cameras (40, 42), wherein a respective black-and-white camera (40, 42) is provided for each of the two defined colours.

19. Apparatus according to Claim 18,
    **characterized in that** a respective colour filter (44, 46) is disposed upstream of at least two black-and-white cameras (40, 42) wherein the colour filters (44, 46) are transmissive to in each case one of the two defined colours.

**20.** Apparatus according to Claim 18 or 19,
**characterized in that** a dichroic mirror (38) is disposed upstream of the black-and-white cameras (40, 42) wherein the colour filters (44, 46) are transmissive to in each case one of the two defined colours.

**21.** Apparatus according to any of Claims 17 to 20,
**characterized in that** the colour camera and/or the black-and-white cameras (40, 42) are/is embodied as CCD chips.

**22.** Apparatus according to any of Claims 11 to 21,
**characterized in that** the apparatus is assigned at least one filter device arranged between the apparatus and extraneous light sources.

**Revendications**

**1.** Procédé de détection d'une surface ou d'une partie de surface d'une pièce ( 26 ) ayant les stades suivants :

- on projette par un dispositif ( 10 ) d'éclairage un motif de lumière déterminé à l'avance sur la partie de surface de la pièce ( 26 ), le motif de lumière étant défini par sa répartition ( $I_{LM}$ ) d'intensité spatiale et/ou temporelle,
- on détecte une répartition ( $I_{OK}$ ) d'intensité sur la partie de surface de la pièce ( 26 ) par un dispositif ( 22 ) de détection d'image et
- on calcule une structure de surface de la partie de surface de la pièce ( 26 ) par un dispositif ( 24 ) informatique sur la base de la répartition ( $I_{OK}$ ) d'intensité sur la partie de surface de la pièce ( 26 ) et de la répartition ( $I_{LM}$ ) d'intensité du motif de lumière,

**caractérisé en ce que** le motif de lumière déterminé à l'avance comprend deux couleurs fondamentales différentes, qui sont projetées alternativement et périodiquement par le dispositif ( 10 ) d'éclairage, **en ce que** l'on détecte, par le dispositif de détection d'image pour une troisième couleur fondamentale, une partie de lumière parasite ayant une répartition uniforme dans le domaine visible, **en ce que**, pour la compensation de la lumière parasite, on détermine et on soustrait une proportion de lumière parasite des deux autres couleurs fondamentales.

**2.** Procédé suivant la revendication 1,
**caractérisé en ce que** des répartitions spectrales des deux couleurs fondamentales différentes du motif de lumière déterminé à l'avance ont respectivement un pic.

**3.** Procédé suivant la revendication 1 ou 2,
**caractérisé en ce que** les deux couleurs définies sont au moins à peu près monochromatiques.

**4.** Procédé suivant l'une des revendications précédentes,
**caractérisé en ce qu'**on filtre ( 44, 46 ) la répartition ( $I_{OK}$ ) d'intensité sur la partie de surface de la pièce ( 26 ), de manière à laisser passer la lumière des deux couleurs définies vers au moins un capteur ( 40, 42 ) d'image.

**5.** Procédé suivant l'une des revendications précédentes,
**caractérisé en ce qu'**on filtre la lumière de sources lumineuses extérieures, de manière à retenir la lumière des deux couleurs définies.

**6.** Procédé suivant l'une des revendications précédentes,
**caractérisé en ce qu'**on détecte, par au moins une caméra en couleur, la répartition ( $I_{OK}$ ) d'intensité sur la partie de surface de la pièce ( 26 ).

**7.** Procédé suivant l'une des revendications 2 à 6,
**caractérisé en ce que**, dans un procédé d'étalonnage, on détermine un rapport entre des intensités de trois couleurs fondamentales de la lumière parasite et on l'utilise comme facteur de correction pour une exploitation.

**8.** Procédé suivant l'une des revendications précédentes,
**caractérisé en ce qu'**on envoie le faisceau lumineux divisé au moins une fois et à au moins deux capteurs ( 40, 42 ) d'image.

**9.** Procédé suivant la revendication 8,

**caractérisé en ce que** les au moins deux capteurs ( 40, 42 ) d'image répondent respectivement à l'une des deux couleurs définies.

10. Procédé suivant la revendication 8 ou 9,
**caractérisé en ce qu'**on divise le faisceau lumineux par au moins un miroir ( 38 ) dichroïque.

11. Dispositif de détection d'une surface ou d'une partie de surface d'une pièce ( 26 ), le dispositif ayant ce qui suit :

- un dispositif ( 11 ) d'éclairage pour la projection d'un motif de lumière déterminé à l'avance sur la partie de surface de la pièce ( 26 ), le motif de lumière étant défini par sa répartition ( $I_{LM}$ ) d'intensité spatiale et/ou temporelle,
- un dispositif ( 22 ) de détection d'image pour la détection d'une répartition ( $I_{OK}$ ) d'intensité sur la partie de surface de la pièce ( 26 ) et
- un dispositif ( 24 ) informatique pour le calcul de la structure de surface de la partie ( 11 ) de surface à partir de la répartition ( $I_{OK}$ ) d'intensité sur la partie de surface de la pièce ( 26 ),

**caractérisé en ce que** le dispositif ( 10 ) d'éclairage produit deux couleurs fondamentales différentes alternativement et périodiquement pour le motif de lumière déterminée à l'avance, **en ce que** le dispositif de détection d'image est, pour une troisième couleur fondamentale, conformé pour la détection d'une partie de lumière parasite, qui a une répartition uniforme dans le domaine visible, le dispositif de compensation de la lumière parasite étant conformé de manière à déterminer et à soustraire une proportion de lumière parasite des deux autres couleurs fondamentales.

12. Dispositif suivant la revendication 11,
**caractérisé en ce que** des répartitions spectrales des deux couleurs fondamentales différentes produites par le dispositif ( 10 ) d'éclairage ont respectivement un pic.

13. Dispositif suivant les revendications 11 ou 12,
**caractérisé en ce que** le dispositif d'éclairage a une roue ( 14 ) colorée, qui est montée en aval d'une source ( 12 ) lumineuse et qui comprend au moins deux filtres colorés.

14. Dispositif suivant la revendication 13,
**caractérisé en ce que** les filtres colorés forment respectivement un section de la roue ( 14 ) colorée.

15. Dispositif suivant l'une des revendications 11 à 14,
**caractérisé en ce que** le dispositif ( 10 ) d'éclairage a au moins une puce ( 16 ) DMD pour la fixation des propriétés géométriques du motif de lumière.

16. Dispositif suivant l'une des revendications 13 à 15,
**caractérisé en ce que** la puce ( 16 ) DMD est montée en aval de la roue ( 14 ) colorée.

17. Dispositif suivant l'une des revendications 11 à 16,
**caractérisé en ce que** le dispositif ( 22 ) de détection d'image a au moins une caméra en couleur.

18. Dispositif suivant l'une des revendications 11 à 16,
**caractérisé en ce que** le dispositif ( 22 ) de détection d'image a au moins deux caméras ( 40, 42 ) en noir et blanc, une caméra ( 40, 42 ) en noir et blanc étant prévue respectivement pour chacune des deux couleurs définies.

19. Dispositif suivant la revendication 18,
**caractérisé en ce qu'**un filtre ( 44, 46 ) coloré est monté en amont d'au moins deux caméras ( 40, 42 ) en noir et blanc, les filtres ( 44, 46 ) colorés étant transparents pour respectivement l'une des deux couleurs définies.

20. Dispositif suivant la revendication 18 ou 19,
**caractérisé en ce qu'**un miroir ( 38 ) dichroïque est monté en amont des caméras ( 40, 42 ) en noir et blanc, les filtres ( 44, 46 ) colorés étant transparents pour respectivement l'une des deux couleurs définies.

21. Dispositif suivant l'une des revendications 17 à 20,
**caractérisé en ce que** les caméras en couleur et/ou les caméras ( 40, 42 ) en noir et blanc sont constituées sous la forme de puces CCD.

22. Dispositif suivant l'une des revendications 11 à 21,
**caractérisé en ce qu'**au dispositif est associé au moins un dispositif de filtrage, qui est monté entre le dispositif et des sources de lumières parasites.

## FIG 1

## FIG 2

## FIG 3

## FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6438272 B
- US 6503195 B
- EP 1523654 B1